# EUROPÄISCHE PATENTSCHRIFT

(11) **EP 2 513 619 B1**
(45) Veröffentlichungstag und Bekanntmachung des Hinweises auf die Patenterteilung: **14.06.2017**
(21) Anmeldenummer: 10773366.9
(22) Anmeldetag: 09.11.2010
(51) Int. Cl.: G01K 1/10

(54) **MESSEINSATZ ZUR TEMPERATURMESSUNG**
MEASURING INSERT FOR MEASURING TEMPERATURES
INSERT DE MESURE PERMETTANT DE MESURER DES TEMPÉRATURES

(30) Priorität: 16.12.2009 DE 102009054747
(43) Veröffentlichungstag der Anmeldung: 24.10.2012
(73) Patentinhaber: Endress+Hauser Wetzer GmbH+Co. KG, 87484 Nesselwang (DE)
(72) Erfinder: MEISSNER, Wilfried, 87459 Pfronten (DE); KALTEIS, Helmut, 87616 Marktoberdorf (DE); SEEFELD, Peter, 87459 Pfronten (DE)
(74) Vertreter: Andres, Angelika Maria
(86) Internationale Anmeldenummer: PCT/EP2010/067148
(87) Internationale Veröffentlichungsnummer: WO 2011/072957

(56) Entgegenhaltungen:
- DE-A1-102004 053 460
- JP-A- 2003 004 539
- US-A1- 2007 024 414
- US-B1- 6 341 892

## Beschreibung

Die Erfindung bezieht sich auf einen Messeinsatz zur Temperaturmessung, der aus Keramik oder aus Magnesiumoxid-, Aluminiumoxid-Sinterwerkstoffen besteht, wobei die dem Messmedium zugewandte Seite an der Messspitze Temperatursensoren, wie Thermoelemente, Thermo-Messwiderstände aus Drahtwendel oder Dünnfilm-Messwiderstände aufnimmt. Ein solcher Messeinsatz ist bspw. aus der Offenlegungsschrift DE 102007036693 A1 bekannt geworden.

Einzelne oder mehrere Messeinsätze werden in metallische oder keramische Schutzrohre eingesetzt, die als mediumsberührende Armaturen den prozessbedingten, teilweise drastischen Temperaturänderungen ausgesetzt sind, wobei die adsorptiv an den keramikartigen Sinterwerkstoff gebundene Feuchte aufgrund der plötzliche Temperaturerhöhung freigesetzt werden kann, mit nachteiligen Auswirkungen direkt auf das Temperatursensorelement und Kondensatbildungen, die in der Folge zu Korrosionserscheinungen im Schutzrohr führen können.

Zur Vermeidung von Korrosionsbildung an einem Thermoelement, welches insbesondere für den Einsatz der Temperaturmessung von Metallschmelzen dient, ist aus der JP2003004539A bekannt geworden, ein das Thermoelement umgebendes Schutzrohr in seinem Außenbereich mit einem Schutzfilm aus einem korrosionsbeständigen und temperaturwechselbeständigen Material zu versehen.

Dem Stand der Technik entsprechend werden zur Herstellung von Temperaturmesseinsätzen üblicherweise vorgefertigte röhrchenförmige Magnesia (MgO)-Halbzeuge oder Aluminiumoxid-Halbzeuge mit Temperatursensoren und Ableitungsdrähten bestückt und in Metallhülsen eingesetzt, wobei üblicherweise keine Dichtwirkung erzielt wird und nachteilige Kondensatbildungen je nach Lagerbedingungen und Luftfeuchte den gesamten Innenraum einschließlich der Sensorableitungen erfassen können.

Das Adsorptiansverhalten von Wasser an Molekularsieben wie Zeolithen oder Silicagel kann durch den Verlauf der zugehörenden Adsorptionsisothermen charakterisiert werden, wobei die Beladung der Adsorbentien bspw. in Abhängigkeit des Partialdrucks bei konstanter Temperatur dargestellt werden kann.

Die Adsorption von Wasser an Poren bildenden Phasen wie Aluminiumoxid, Al₂O₃ oder ähnlich strukturierten Metalloxyde kann zu mehrschichtigen

Beladungen führen, wobei die Adsorptionsisothermen, mit zunehmendem Wasserdampfpartialdruck erst eine Abflachung bei der Beladungszunahme aufweisen, die bei noch höherer Beladung aufgrund von Mehrschichten-Adsorptionsprozesse stark ansteigt und bei noch höherem Partialdruck in eine Kondensatbildung übergeht.

Die andererseits an einer Al₂O₃-Oberfläche fest gebundenen H₂O-Monolayer können eine sehr hohe Adsorptionsenthalpie aufweisen und sind demzufolge nur mittels Hochtemperatur oder Hochtemperatur-Vakuumbehandlungen entfernbar.

An den gepressten keramikartigen Konfektionierungen wie sie in einem Messeinsatz vorliegen können, kann die Temperaturabhängigkeit des Wasserdampfpartialdruckes über den Verlauf der Adsorptionsisosteren gezeigt werden, dabei wird der als Funktion der Temperatur exponentiell ansteigende Wasserdampfpartialdruck, bei konstantem Volumen dargestellt.

Keramikartige Werkstoffe, wie Aluminiumoxid oder vergleichbare Metalloxide, die je nach Vorbehandlung als offenporige Modifikationen vorliegen können und offenporige Adsorptionsstellen aufweisen, benötigen für schwach adsorbierte Wassermoleküle nur moderate Desorptionsenthalpien, um das Wasser wieder in die Dampfphase zu überführen, wobei beim Vorliegen von zusätzlich vorhandenen Kondensaten lediglich die Verdampfungsenthalpie aufzuwenden ist.

So kann beim üblichen prozessbedingtem Aufheizen bereits ein merklicher Wasserdampfpartialdruck in der unmittelbaren Umgebung von mit Feuchte beladenen Keramikwerkstoffen auftreten.

Auftretende Feuchte kann erheblich die korrekte Funktion der Sensorelemente beeinflussen bzw. anschließende Kondensatbildung nach Abkühlungszyklen, kann beispielsweise zu irreversiblen Korrosionseffekten an Temperatursensoren oder deren Kabelableitungen beitragen.

Die vorliegende Erfindung setzt sich daher die Aufgabe, einen Messeinsatz bereit zu stellen, welcher die beschriebenen Nachteile des Standes der Technik überwindet.

Die Aufgabe wird erfindungsgemäß dadurch gelöst, dass der Messeinsatz aneinander grenzende funktionalisierte Oberflächenbereiche aufweist, wobei sich das Adsorptionsverhalten einer Flüssigkeit an diesen Oberflächenbereichen voneinander unterscheidet. Dadurch kann der nachteilige Einfluss von Feuchte als Wasserdampf oder Kondensat auf Thermometer nach beispielsweise raschen prozessbedingten Temperaturänderungen vorgebeugt werden. Sich ggf. auf der Oberfläche des Messeinsatzes bildende Feuchtigkeit kann durch Verwendung der funktionalisierten Oberflächen, die sich hinsichtlich in ihrem Adsorptionsverhalten unterscheiden, abgeleitet werden.

Erfindungsaemäß weist der Messeinsatz eine während eines Messbetriebs mit einem Messstoff in thermischem Kontakt stehende Messspitze auf, wobei im Bereich der Messspitze ein Temperatursensor, der zur Erfassung der Temperatur eines Messstoffs dient, angeordnet ist. In einer Ausgestaltung des Messeinsatzes dienen die funktionalisierten Oberflächenbereiche dazu, eine Flüssigkeit von einem Oberflächenbereich des Messeinsatzes hin zu einem Oberflächenbereich mit einer höheren Affinität hinsichtlich der Adsorption der Flüssigkeit zu leiten. Dafür können bspw. bestimmte Materialien oder eine bestimmte Abfolge von funktionalisierten Oberflächenbereichen, d.h. eine bestimmte Anordnung, eingesetzt werden.

In einer weiteren Ausgestaltung weist die Messspitze einen funktionalisierten Oberflächenbereich auf, der im Vergleich mit wenigstens einem anderen Oberflächenbereich des Messeinsatzes die geringste Affinität hinsichtlich der Adsorption der Flüssigkeit aufweist. Dadurch kann gewährleistet werden, dass im Bereich der Messspitze keine Schäden aufgrund von sich ablagernder Feuchtigkeit entstehen.

In einer weiteren Ausgestaltung nimmt die Affinität zur Adsorption der Flüssigkeit auf der Oberfläche des Messeinsatzes mit zunehmender Entfernung von der Messspitze zu. In dieser Anordnung ist von Vorteil, dass durch die vorgeschlagene Verteilung des Adsorptionsverhaltens sich ablagernde Feuchtigkeit, d.h. Flüssigkeit, bspw. möglichst weit von der Messspitze geleitet wird.

In einer weiteren Ausgestaltung erfolgt die Änderung des Adsorptionsverhaltens zwischen den funktionalisierten Oberflächenbereichen stufenweise. Die funktionalisieren Oberflächenbereiche können also so angeordnet sein, dass das Adsorptionsverhalten an einem Übergang zwischen den Oberflächenbereichen sich sprunghaft ändert.

In einer weiteren Ausgestaltung erfolgt die Änderung des Adsorptionsverhaltens zwischen den funktionalisierten Oberflächenbereichen kontinuierlich. D.h. das Adsorptionsverhalten kann sich kontinuierlich in Abhängigkeit der Position auf der Oberflächen der Messspitze ändern, bspw. mit zunehmendem Abstand von der Messspitze.

In einer weiteren Ausgestaltung des Messeinsatzes ist der Temperatursensor wenigstens teilweise in den Messeinsatz eingebettet.

In einer weiteren Ausgestaltung ist der Temperatursensor an die Adern einer Mantelleitung angeschlossen ist, wobei die Messspitze bzw. der darin wenigstens teilweise eingebettete Temperatursensor die Mantelleitung an einem Ende abschließt, und dass die Oberfläche der Mantelleitung im Bereich der Messspitze und die sich daran anschließende Oberfläche der Mantelleitung funktionalisierte Oberflächenbereiche mit sich voneinander unterscheidendem Adsorptionsverhalten aufweisen. Dabei kann es ausreichend sein, dass nur ein Teil der gesamten Oberfläche des Messeinsatzes funktionalisierte Oberflächenbereiche aufweist.

In einer weiteren Ausgestaltung des Messeinsatzes bestehen die funktionalisierten Oberflächenbereiche mit unterschiedlichem Adsorptionsverhalten aus unterschiedlichen Anteilen, insbesondere modifizierter bzw. unmodifizierter, Wasseradsorber und/oder hydrophober, superhydrophober oder hydrophobisierter Keramik.

In einer weiteren Ausgestaltung weist die Oberfläche des Messeinsatzes eine Beschichtung mit einheitlicher Beschichtungsstärke, insbesondere mit einer Beschichtungsstärke von 0,2 bis 5 mm auf, wobei die Beschichtung in Richtung zum Temperatursensor hin einen Gradienten mit abnehmender Wasseradsorption aufweist. Der Messeinsatz kann bspw. über eine Ummantelung aus verdichteten, eingepressten Trockenmittelbeschichtungen verfügen, die zum Temperatursensorelement hin einen Gradienten mit kontinuierlich oder stufenweise angepassten Wasseradsorptionsverhalten aufweisen, wobei beispielsweise eine abnehmende Wasseradsorption mittels unterschiedlicher Anteile an modifizierten und unmodifizierten Adsorbentien sowie hydrophoben, superhydrophoben oder hydrophobisierten Keramikkonfektionierungen realisiert wird. Die funktionalisierten Oberflächenbereiche können bspw. durch diese Ummantelung gebildet werden.

In einer weiteren Ausgestaltung ist das Adsorptionsverhalten der funktionalisierten Oberflächen mittels Wasseradsorber beeinflusst, wobei die Wasseradsorber unterschiedliche Adsorptionskapazitäten bzw. unterschiedliche Adsorptionsisothermen aufweisen.

In einer weiteren Ausgestaltung ist das Adsorptionsverhalten der funktionalisierten Oberflächenbereiche mittels einer hydrophoben, superhydrophoben und/oder hydrophobisierten Keramik beeinflusst.

In einer weiteren Ausgestaltung weist die Beschichtung aus Wasseradsorbern mit einheitlicher Adsorptionskapazität sowie einheitlicher Adsorptionsisotherme besteht und zur Messspitze, in die das Sensorelement eingebettet ist, hin eine dünner werdende Beschichtungsstärke auf.

Der Messeinsatz kann bspw. über eine Ummantelung aus verdichteten Trockenmittelbeschichtungen verfügen, die zum Temperatursensor, der im Bereich der Messspitze angeordnet ist, hin einen Gradienten mit kontinuierlich oder stufenweise angepasstem Wasseradsorptionsverhalten aufweisen, wobei unterschiedliche Anteile an modifizierten und unmodifizierten Adsorbentien sowie hydrophoben, superhydrophoben oder hydrophobisierten Keramikkonfektionierungen eingesetzt werden können, um die Wasseraufnahmeaffinität herabzusetzen.

Nach einer Ausgestaltung der Erfindung werden in der unmittelbaren Umgebung des Temperatursensors und der Anschlussleitungen, Beschichtungen mit einheitlichen Beschichtungsstärken von 0,2 bis 5 mm eingesetzt, wobei die dafür eingesetzten Adsorbentien einen Gradienten aufweisen. Das unmittelbar das Temperatursensorelement umgebende Schichtsegment neigt daher nicht zur Multischichtadsorption und verfügt über keine hohe Adsorptionskapazität und grenzt anordnungsbedingt jeweils an Beschichtungszonen an, die überschüssigen Wasserdampf aus der Sensor-Zone mittels Diffusionsprozesse in Richtung der Beschichtung mit höherer Feuchte-Affinität aufnehmen.

Eine Ausgestaltung sieht vor, dass die Beschichtung einen abgestuften Gradienten aufweist. Eine weitere Ausgestaltung sieht vor, dass die Beschichtung einen kontinuierlichen Gradienten aufweist.

In einer weiteren Ausgestaltung verfügt der Messeinsatz über eine Beschichtung, die einen Gradienten aufweist der mittels Wasseradsorbentien gebildet wird, die unterschiedliche Adsorptionskapazitäten bzw. unterschiedliche Adsorptionsisothermen aufweisen.

Eine weitere Ausgestaltung sieht vor, dass als Wasseradsorber anteilig modifiziertes und unmodifiziertes 4-Angstroem- bis 8-Angstroem-Molekularsieb in einem Mischungsverhältnis von 80:1 bis 2:1 als Mantelmaterial eingesetzt wird.

Eine weitere Ausgestaltung sieht vor, dass als Wasseradsorber
Zeolithe mit unterschiedlichen Adsorptionskapazitäten bzw. unterschiedlichen Adsorptionsisothermen anteilig in verschiedenen Mischungsverhältnissen als Mantelmaterial eingesetzt werden.

Eine zusätzliche Ausgestaltung sieht vor, dass als Wasser adsorbierende Trockenmittel anteilig Magnesiumoxyde und unmodifiziertes 4-Angstroem- bis 8-Angstroem- Molekularsieb in einem Mischungsverhältnis von 70:1 bis 3:1 verpresst als Mantelmaterial eingesetzt werden.

In einer weiteren Ausgestaltung verfügt die Beschichtungszone, die in unmittelbarer Umgebung an das Sensorelement angrenzt und dieses umschließt neben den Adsorbentien mit der geringsten Adsorptionskapazität über anteilige Zuschläge hydrophober, superhydrophober und hydrophobisierter Keramikkonfektionierungen, wobei die Wasseraufnahmeaffinität deutlich herabgesetzt wird.

In einer weiteren Ausgestaltung verfügt der Messeinsatz über eine Beschichtung, die aus Wasseradsorbern mit einheitlicher Adsorptionskapazität sowie einheitlicher Adsorptionsisotherme besteht und zum Sensorelement hin eine dünner werdende Beschichtungsstärke aufweist.

In einer weiteren Ausgestaltung besteht die Ummantelung aus Wasseradsorbern, die in Richtung zum Sensorelement eine dünner werdende Beschichtungsstärke aufweisen, wobei zusätzlich die Beschichtung in Richtung zum Sensorelement, einen Gradienten mit abnehmender Wasseradsorption besitzt.

Eine Ausgestaltung sieht vor, dass die Beschichtung in Richtung zum Sensorelement eine dünner werdende Beschichtungsstärke aufweist und zusätzlich einen abgestuften Gradienten besitzt.

Eine weitere Ausgestaltung sieht vor, dass die Beschichtung die in Richtung zum Sensorelement eine dünner werdende Beschichtungsstärke aufweist, zusätzlich einen kontinuierlichen Gradienten besitzt.

In einer zusätzlichen Ausgestaltung weist die Ummantelung des Messeinsatzes eine rechteckig prismatische, vieleckig prismatische, zylindrische oder kegelförmige Bauform auf.

Die Erfindung wird anhand der nachfolgenden Zeichnungen näher erläutert. Es zeigen:
Fig. 1: ein Kompaktthermometer für den Prozesseinsatz.
Fig. 2: eine schematische Darstellung eines Schnitts durch die Längsachse einer Ausgestaltung eines Messeinsatzes mit stufenweiser Änderung des Adsorptionsverhaltens in Fig. 2a) und mit kontinuierlicher Veränderung in Fig. 2b),
Fig. 3: eine schematische Darstellung eines Schnitts durch die Längsachse einer weiteren Ausgestaltung eines Messeinsatzes, mit stufenweiser Änderung des Adsorptionsverhaltens in Fig. 3a) und mit kontinuierlicher Veränderung in Fig. 3b),
Fig. 4: eine schematische Darstellung einer mit einem Messeinsatzes bestückten Schutzarmatur, und
Fig. 5: eine schematische Darstellung eines Schnittes durch ein mit zwei Messeinsätzen bestücktes Schutzrohr.

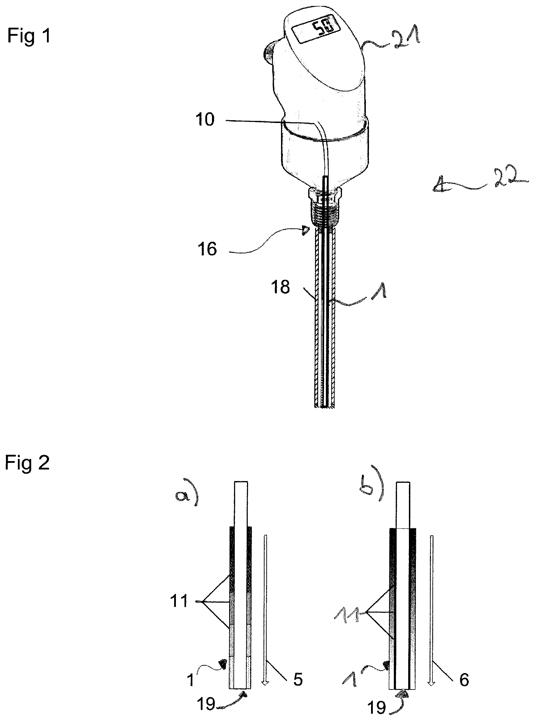

Figur 1 zeigt ein sog. Kompaktthermometer 22 bestehend aus einem metallischen Schutzrohr 18, das beispielsweise aus Stahllegierungen wie 316 L oder Inconel besteht, das mit einem Messeinsatz 1 ausgestattet ist. An den Messeinsatz 1 angeschlossen ist ein sog. Kopftransmitter 21, d.h. ein Messumformer, der zur Verarbeitung der mittels des Messeinsatzes aufgenommenen Messsignale dient.

Figur 2 zeigt eine schematische Darstellung eines Schnitts durch unterschiedliche Ausgestaltungen des Messeinsatzes 1. In Figur 2 a) ist ein Messeinsatz 1 mit Beschichtungen 11 einer annähernd einheitlichen Beschichtungsstärke bspw. mit einer Beschichtungsstärke von 0,2 bis 5 mm gezeigt, der einen abgestuften Gradienten 5 mit abnehmender Wasseradsorptionskapazität aufweist. Figur 2 b) zeigt einen Messeinsatz 1, der ebenfalls bei einer annähernd einheitlichen Beschichtungsstärke über einen kontinuierlichen Gradienten 6 mit abnehmender Wasseradsorptionskapazität verfügt.

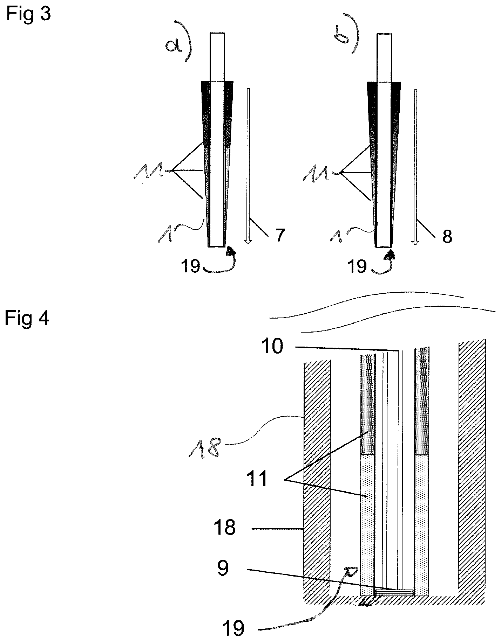

Figur 3 a) zeigt ein Schnittbild des Messeinsatzes 1 der in Richtung zum Temperatursensor, der sich an dem Kopfende des Messeinsatzes 1 befindet eine dünner werdende Beschichtungsstärke aufweist, wobei zusätzlich die Beschichtung 11 in Richtung zum Temperatursensor, einen gestuften Gradienten 7 mit abnehmender Wasseradsorption besitzt. Figur 3 b) zeigt einen Messeinsatz 1, der über eine dünner werdende Beschichtungsstärke, sowie über einen kontinuierlichen Gradienten 8 mit abnehmender Wasseradsorptionskapazität verfügt.

Figur 4 zeigt in einem Schnittbild das untere während eines Messbetriebs messstoffberührende Segment eines mit einem Messeinsatz 1 bestückten Schutzrohrs 18, das aus Metalllegierungen besteht und dessen Temperatursensor 9 in thermischen Kontakt an des Schutzrohrende angeschlossen ist. Ferner ist aus Figur 4 zu ersehen, wie der mit den elektrischen Verdrahtungen 10 kontaktierte Temperatursensor 9 von einem Teil der Beschichtung 11 mit abgestuftem Wasseradsorptionsgradienten umgeben ist, der beispielsweise über die niedrigste Adsorptionskapazität verfügt und erfindungsgemäß in einer weiteren Ausgestaltung mit hydrophoben, superhydrophoben oder hydrophobisierten Keramikkonfektionierungen umgeben wird, um die Wasseraufnahmeaffinität weiter herabzusetzen.

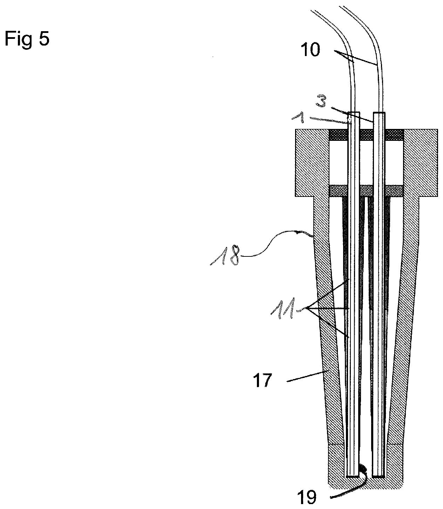

Figur 5 zeigt das Schnittbild eines mit zwei Messeinsätzen 1, 3 bestückten Keramikschutzrohrs 17, wobei die Messeinsätze 1, 3, Beschichtungen 11 mit dünner werdenden Beschichtungsstärken und zusätzlich in Richtung zum Temperatursensor, gestufte Gradienten 7 mit abnehmender Wasseradsorption aufweisen. Das in unmittelbarem Kontakt mit dem Temperatursensor 9 stehende ummantelnde untere Beschichtungssegment 11 verfügt über eine beispielsweise niedrige Wasser-Adsorptionskapazität und weist in einer weiteren Ausgestaltung hydrophobe, superhydrophobe oder hydrophobisierte Keramikkonfektionierungen auf, mit denen die Wasseraufnahmeaffinität unmittelbar am Temperatursensor 9 herabgesetzt wird.

### Bezugszeichenliste

- 1: Messeinsatz
- 5: Gestufter Gradient, abnehmende Wasseradsorption bei konstanter Schichtdicke
- 6: Kontinuierlicher Gradient, abnehmende Wasseradsorption bei konstanter Schichtdicke
- 7: Gestufter Gradient, abnehmende Wasseradsorption bei abnehmender Schichtdicke
- 8: Kontinuierlicher Gradient, abnehmende Wasseradsorption bei abnehmender Schichtdicke
- 9: Temperatursensor
- 10: Anschlussleitungen
- 11: Beschichtung
- 18: Schutzrohr
- 19: Messspitze
- 21: Kopftransmitter
- 22: Kompaktthermometer

## Patentansprüche

1. Messeinsatz (1) für ein Thermometer mit einer Schutzarmatur (18) wobei der Messeinsatz eine während eines Messbetriebs mit einem Messstoff in thermischem Kontakt stehenden Messspitze (19) aufweist, wobei im Bereich der Messspitze (1) ein Temperatursensor (9), der zur Erfassung der Temperatur eines Messstoffs dient, angeordnet ist,
**dadurch gekennzeichnet,**
**dass** der Messeinsatz (1) aneinander grenzende funktionalisierte Oberflächenbereiche (11) aufweist,
wobei sich das Adsorptionsverhalten einer Flüssigkeit an diesen Oberflächenbereichen (11) voneinander unterscheidet.

2. Messeinsatz (1) nach Anspruch 1,
**dadurch gekennzeichnet,**
**dass** die funktionalisierten Oberflächenbereiche (11) dazu dienen, eine Flüssigkeit von einem Oberflächenbereich (11) des Messeinsatzes hin zu einem Oberflächenbereich (11) mit einer höheren Affinität hinsichtlich der Adsorption von Flüssigkeit zu leiten.

3. Messeinsatz (1) nach wenigstens einem der vorherigen Ansprüche,
**dadurch gekennzeichnet,**
**dass** die Messspitze einen funktionalisierten Oberflächenbereich (11) aufweist, der im Vergleich zu wenigstens einem anderen Oberflächenbereich (11) des Messeinsatzes (1) die geringste Affinität hinsichtlich der Adsorption von Flüssigkeit aufweist.

4. Messeinsatz (1) nach Anspruch 1 oder 3,
**dadurch gekennzeichnet,**
**dass** die Affinität zur Adsorption von Flüssigkeit auf der Oberfläche des Messeinsatzes (1) mit zunehmender Entfernung von der Messspitze (19) zunimmt.

5. Messeinsatz (1) nach wenigstens einem der vorherigen Ansprüche,
**dadurch gekennzeichnet,**
**dass** die Änderung des Adsorptionsverhaltens zwischen den funktionalisierten Oberflächenbereichen (11) stufenweise erfolgt.

6. Messeinsatz (1) nach wenigstens einem der vorherigen Ansprüche,
**dadurch gekennzeichnet,**
**dass** die Änderung des Adsorptionsverhaltens zwischen den funktionalisierten Oberflächenbereichen (11) kontinuierlich erfolgt.

7. Messeinsatz (1) nach wenigstens einem der vorherigen Ansprüche,
**dadurch gekennzeichnet,**
**dass** der Temperatursensor (9) wenigstens teilweise in den Messeinsatz (1) eingebettet ist.

8. Messeinsatz (1) nach wenigstens einem der vorherigen Ansprüche,
**dadurch gekennzeichnet,**
**dass** der Temperatursensor (9) an die Adern einer Mantelleitung angeschlossen ist, wobei die Messspitze (19) bzw. der darin wenigstens teilweise eingebettete Temperatursensor (9) die Mantelleitung an einem Ende abschließt, und dass die Oberfläche der Mantelleitung im Bereich der Messspitze (19) und die sich daran anschließende Oberfläche (11) der Mantelleitung funktionalisierte Oberflächenbereiche (11) mit sich voneinander unterscheidendem Adsorptionsverhalten aufweisen.

9. Messeinsatz (1) nach wenigstens einem der vorherigen Ansprüche,
**dadurch gekennzeichnet,**
**dass** die funktionalisierten Oberflächenbereiche (11) mit unterschiedlichem Adsorptionsverhalten aus unterschiedlichen Anteilen, insbesondere modifizierter bzw. unmodifizierter, Wasseradsorber und/oder hydrophober, superhydrophober oder hydrophobisierter Keramik bestehen.

10. Messeinsatz (1) nach wenigstens einem der vorherigen Ansprüche,
**dadurch gekennzeichnet,**
**dass** die Oberflächen des Messeinsatzes (1) eine Beschichtung (11) mit einheitlicher Beschichtungsstärke, insbesondere mit einer Beschichtungsstärke von 0,2 bis 5 mm aufweisen, wobei die Beschichtung (11) in Richtung zum Temperatursensor (9) hin einen Gradienten (5, 6, 7, 8) mit abnehmender Wasseradsorption aufweist.

11. Messeinsatz (1) nach wenigstens einem der vorherigen Ansprüche,
**dadurch gekennzeichnet,**
**dass** das Adsorptionsverhalten der funktionalisierten Oberflächen (11) mittels Wasseradsorber beeinflusst ist, wobei die Wasseradsorber unterschiedliche Adsorptionskapazitäten bzw. unterschiedliche Adsorptionsisothermen aufweisen.

12. Messeinsatz (1) nach wenigstens einem der vorherigen Ansprüche,
**dadurch gekennzeichnet,**
**dass** das Adsorptionsverhalten der funktionalisierten Oberflächen (11) mittels einer hydrophoben, superhydrophoben und/oder hydrophobisierten Keramik beeinflusst ist.

13. Messeinsatz (1) nach wenigstens einem der vorherigen Ansprüche,
**dadurch gekennzeichnet,**
**dass** die Beschichtung (11) aus Wasseradsorbern mit einheitlicher Adsorptionskapazität sowie einheitlicher Adsorptionsisotherme besteht und zum Temperatursensor (9) hin eine dünner werdende Beschichtungsstärke aufweist.

## Claims

1. Measuring insert (1) for a thermometer with a protective fitting (18), wherein the measuring insert has a measuring tip (19) that is in thermal contact with a medium during measuring operation,
wherein a temperature sensor (9), which is used to measure the temperature of a medium, is arranged in the area of the measuring tip (19)
**characterized in that**
the measuring insert (1) has functionalized surface sections (11) which are adjacent to one another,
wherein the adsorption behavior of a liquid differs at these surface sections (11).

2. Measuring insert (1) as claimed in Claim 1,
**characterized in that**
the functionalized surface sections (11) are used to conduct a liquid from a surface section (11) of the measuring insert (1) towards a surface section (11) with a greater affinity for the adsorption of liquid.

3. Measuring insert (1) as claimed in at least one of the previous claims, **characterized in that**
the measuring tip has a functionalized surface section (11) which has the least affinity for the adsorption of liquid compared with at least one other surface section (11) of the measuring insert (1).

4. Measuring insert (1) as claimed in Claim 1 or 3,
**characterized in that**
the affinity for the adsorption of liquid on the surface of the measuring insert (1) increases with increasing distance from the measuring point (19).

5. Measuring insert (1) as claimed in at least one of the previous claims,
**characterized in that**
the adsorption behavior of the functionalized surface sections (11) changes gradually in stages.

6. Measuring insert (1) as claimed in at least one of the previous claims,
**characterized in that**
the adsorption behavior of the functionalized surface sections (11) changes continuously.

7. Measuring insert (1) as claimed in at least one of the previous claims,
**characterized in that**
the temperature sensor (9) is at least partially embedded in the measuring insert (1).

8. Measuring insert (1) as claimed in at least one of the previous claims,
**characterized in that**
the temperature sensor (9) is connected to the strands of a sheathed cable, wherein the measuring tip (19) or the temperature sensor (9) partially embedded therein terminates the sheathed cable at one end, and **in that** the surface of the sheathed cable in the area of the measuring tip (19) and the adjoining surface (11) of the sheathed cable have functionalized surface sections (11) with different absorption behavior.

9. Measuring insert (1) as claimed in at least one of the previous claims,
**characterized in that**
the functionalized surface sections (11) with different adsorption behavior are made from different proportions of water adsorbers, particularly modified or unmodified, and/or of hydrophobic, superhydrophobic or hydrophobized ceramic.

10. Measuring insert (1) as claimed in at least one of the previous claims,
**characterized in that**
the surface of the measuring insert (1) has a coating (11) with a uniform coating thickness, particularly with a coating thickness of 0.2 to 5 mm, wherein the coating (11) presents a gradient with decreasing water adsorption in the direction of the temperature sensor (9).

11. Measuring insert (1) as claimed in at least one of the previous claims,
**characterized in that**
the adsorption behavior of the functionalized surfaces (11) is influenced by water adsorbers, wherein the water adsorbers have different adsorption capacities or different adsorption isotherms.

12. Measuring insert (1) as claimed in at least one of the previous claims,
**characterized in that**
the adsorption behavior of the functionalized surfaces (11) is influenced by a hydrophobic, superhydrophobic or hydrophobized ceramic.

13. Measuring insert (1) as claimed in at least one of the previous claims,
**characterized in that**
the coating (11) consists of water adsorbers with a uniform adsorption capacity and a uniform adsorption isotherm and the coating thickness becomes thinner in the direction of the temperature sensor (9).

## Revendications

1. Insert de mesure (1) pour un thermomètre avec une armature de protection (18), l'insert de mesure comportant, pendant la mesure, une pointe de mesure (19) en contact thermique avec un produit,
un capteur de température (9) étant disposé dans la zone de la pointe de mesure (1), lequel capteur sert à l'acquisition de la température d'un produit,
**caractérisé**
**en ce que** l'insert de mesure (1) comporte des zones de surface fonctionnalisées (11) contiguës,
le comportement d'adsorption d'un liquide se distinguant sur ces zones de surfaces (11).

2. Insert de mesure (1) selon la revendication 1,
**caractérisé**
**en ce que** les zones de surface fonctionnalisées (11) servent à acheminer un liquide d'une zone de surface (11) de l'insert de mesure (1) vers une zone de surface (11) d'affinité supérieure en terme d'adsorption de liquide.

3. Insert de mesure (1) selon au moins l'une des revendications précédentes,
**caractérisé**
**en ce que** la pointe de mesure comprend une zone de surface fonctionnalisée (11) qui présente, par rapport à au moins une zone de surface fonctionnalisée (11) de l'insert de mesure (1), l'affinité la plus faible en terme d'adsorption de liquide.

4. Insert de mesure (1) selon la revendication 1 ou 3,
**caractérisé**
**en ce que** l'affinité pour l'adsorption de liquide sur la surface de l'insert de mesure (1) croît à mesure que la distance par rapport à la pointe de mesure (19) augmente.

5. Insert de mesure (1) selon au moins l'une des revendications précédentes,
**caractérisé**
**en ce que** la modification du comportement d'adsorption intervient par paliers entre les zones de surface fonctionnalisées (11).

6. Insert de mesure (1) selon au moins l'une des revendications précédentes,
**caractérisé**
**en ce que** la modification du comportement d'adsorption intervient continuellement entre les zones de surface fonctionnalisées (11).

7. Insert de mesure (1) selon au moins l'une des revendications précédentes,
**caractérisé**
**en ce que** le capteur de température (9) est incorporé au moins partiellement dans l'insert de mesure (1).

8. Insert de mesure (1) selon au moins l'une des revendications précédentes,
**caractérisé**
**en ce que** le capteur de température (9) est raccordé aux conducteurs d'un câble rigide sous gaine, la pointe de mesure (19) ou le capteur de température (9) y étant au moins partiellement incorporé terminant une extrémité du câble rigide sous gaine, et **en ce que** la surface du câble rigide sous gaine présente, dans la zone de la pointe de mesure (19) et de la surface (11) jointive du câble rigide sous gaine, des zones de surface fonctionnalisées (11) dont le comportement d'adsorption est différent entre les différentes zones.

9. Insert de mesure (1) selon au moins l'une des revendications précédentes,
**caractérisé**
**en ce que** les zones de surface fonctionnalisées (11) présentant un comportement d'adsorption différent sont constituées de parts différentes d'adsorbeurs d'eau, notamment modifiés ou non modifiés, et/ou de céramique hydrophobe, superhydrophobe ou hydrophobisée.

10. Insert de mesure (1) selon au moins l'une des revendications précédentes,
**caractérisé**
**en ce que** la surface de l'insert de mesure (1) présente un revêtement (11) d'une épaisseur uniforme, notamment d'une épaisseur de 0,2 à 5 mm, le revêtement (11) présentant en direction du capteur de température (9) un gradient (5, 6, 7, 8) avec adsorption d'eau décroissante.

11. Insert de mesure (1) selon au moins l'une des revendications précédentes,
**caractérisé**
**en ce que** le comportement d'adsorption des zones de surface fonctionnalisées (11) est influencé au moyen d'un adsorbeur d'eau, l'adsorbeur d'eau présentant différentes capacités d'adsorption ou différents isothermes d'adsorption.

12. Insert de mesure (1) selon au moins l'une des revendications précédentes,
**caractérisé**
**en ce que** le comportement d'adsorption des zones de surface fonctionnalisées (11) est influencé au moyen d'une céramique hydrophobe, superhydrophobe ou hydrophobisée.

13. Insert de mesure (1) selon au moins l'une des revendications précédentes,
**caractérisé**
**en ce que** le revêtement (11) est constitué d'adsorbeurs d'eau avec une capacité d'adsorption uniforme ainsi que d'isothermes d'adsorption uniformes, et présente en direction du capteur de température (9) une épaisseur de revêtement s'amenuisant progressivement.
